# NEW EUROPEAN PATENT SPECIFICATION

(11) **EP 2 383 309 B2**
(45) Date of publication and mention of the opposition decision: **20.11.2019**
(45) Mention of the grant of the patent: 23.11.2016
(21) Application number: 10161395.8
(22) Date of filing: 29.04.2010
(51) Int. Cl.: C08J 9/00, C08J 9/14

(54) **Cellular polyester made of post-consumer flakes and the use of products made thereof**
Zellulärer Polyester aus Altpolyesterflocken und Verwendung der daraus hergestellten Produkte
Polyester cellulaire fabriqué à partir de copeaux post-consommateur et utilisation de produits correspondants

(43) Date of publication of application: 02.11.2011
(73) Proprietor: Armacell Enterprise GmbH & Co. KG, 12529 Schönefeld OT Waltersdorf (DE)
(72) Inventor: Meller, Mika, 04400, Jarvenpaa (FI); Li, Jie, 4800, Zofingen (CH); Dolega, Justyna, 51164, Wroclaw (PL); Gräter, Horst, 48155, Münster (DE)
(74) Representative: Vossius & Partner Patentanwälte Rechtsanwälte mbB

(56) References cited:
- WO-A1-90/10667
- CH-A5- 686 082
- US-A- 5 391 582
- US-A1- 2002 177 663

## Description

This invention relates to manufacturing of polyester based expanded materials made of pre-cleaned and compounded post-consumer polyester by increasing the intrinsic viscosity (IV) during an extrusion process, the manufacturing of such materials and the use of products made thereof.

The term "post consumer" is defined as material being brought back into the process - i.e. being recycled - after its prior use, e.g. as PET bottles.

Expanded polyester polymers, i.e. polyester foam or sponge, are of major importance for a large number of applications related to insulation against temperature gradients, noise shielding, vibration damping, lightweight construction etc. Foaming of polyesters and the use of post-consumer polyester are rather new technologies, and only limited numbers of prior art can be found.

M&G Polimeri describes (EP 0866089) that significantly higher than standard intrinsic viscosity (IV) resin (IV > 1.2 ml/g) is required for physical foaming of polyester, especially when lower densities are targeted. A high viscosity is required in order to build up necessary pressure for foaming to occur and to prevent cell collapse.

Traditionally solid state polymerization is used to increase the molecular weight and hence viscosity to the required level.

The re-use of post consumer polyester material is not novel. For example molded solid and high density sheets have been made by using post consumer raw materials.

CH686082 and JP2000169613 describe the manufacturing of such products, but limited to molded products due to the low intrinsic viscosity of post consumer polyesters achievable during such processes.

Furthermore blends of post consumer polyester material, polypropylene and fillers have been used to make this polyester foamable (see JP2001129867), but the possible quantity of post consumer polyester is very limited.

JP2003165861 describes the expansion of polyester resins using post consumer material but limited to the use of chemical blowing agents under the additional term of using a thickening agent <=20 g/10 min in melt flow rate (MFR) to increase the intrinsic viscosity to the required level.

All these processes do not allow the use of high amounts of post-consumer polyester and/or lead to worse mechanical properties compared to virgin polyester materials.

US 5391582 A1 discloses a process for producing a polyester foam comprising melting polyethylene terephthalate (PET) and a recycled PET. Nevertheless, the PET is a branched PET and not a linear and thus, an additional process step is necessary to modify the PET, i.e. to obtain a branched PET.

Some work was even done to improve the intrinsic viscosity of post consumer polyester by solid state polymerization, e.g. US 6130261 describes the recycling of polyester foam by densification and afterwards drying the material, but the process takes several hours, limited to expanded polyester as base materials.

It is widely known that extrusion reduces the intrinsic viscosity by mechanical and thermal degradation of polyesters which is detrimental for foaming. That makes it quite difficult to use post-consumer polyester, especially for foaming processes which require high intrinsic viscosities.

It has now unexpectedly found out that an additional extrusion step of post-consumer polyester prior to the foam extrusion process results in superior foams, equal to foams made of virgin polyester.

In order to achieve this, post consumer polyester has to be pre-cleaned from dust and moisture and afterwards compounded and filtered in an extruder. During this step moisture and oxygen can be exhausted by melt degassing to prevent the material of further oxidative and hydrolytic degradation. Additionally chain extending additives can be added to increase the intrinsic viscosity. Afterwards the material is granulated.

The present invention can be summarized by the following items 1 to 8:
1. An expanded, cellular material comprising at least 50 wt% of post-consumer PET resin and less than 50 wt% of virgin PET resin obtainable by pre-cleaning the post-consumer PET resin from dust and moisture, compounding and filtering in an additional extrusion step and afterwards granulating, and whereby the intrinsic viscosity of the polymer(s) is upgraded during the subsequent foam extrusion process and increased by means of a reactive additive (RA), a physical blowing agent is introduced to the mixture and the intrinsic viscosity of the extruder exiting foam is higher than 1.2 ml/g, preferably above 1.35 ml/g and the density is between 40 and 200 kg/m³, preferably between 50 and 150 kg/m³, wherein
   (A) the reactive additive is a concentrate comprising
      (i) an ethylene-acrylate copolymer,
      (ii) a high-temperature thermoplastic resin which is selected from a group consisting of a high-temperature thermoplastic resin having 1) a melting point not lower than 200°C for crystalline or 2) a glass transition temperature not lower than 140°C for amorphous polymers, and
      (iii) a multifunctional compound selected from of one or more chain-extending/ branching ingredients having either a melting point or a reaction temperature higher than 140°C, wherein
      the multifunctional compound is selected from a group consisting of tetracarboxylic dianhydride, polyepoxides, oxazolines, oxazines, acyllactams and antioxidant containing sterically hindered phenolic end groups or mixtures thereof; and
   (B) the physical blowing agent is either a hydrocarbon, fluorocarbon, argon, nitrogen, CO₂, or a mixture thereof.
2. The expanded, cellular material according to item 1 which further comprises a flame retardant or a mixture of flame retardants to improve the fire properties.
3. The expanded, cellular material according to any of the preceding items which further comprises nucleating agents and fillers.
4. A process for producing an expanded, cellular material according to anyone of items 1 to 3, comprising at least 50 wt% of post-consumer PET resin and less than 50 wt% of virgin PET resin, wherein the post-consumer PET resin is carefully cleaned from dust and moisture, compounded and filtered in an extruder and afterwards granulated, and wherein during the subsequent foam extrusion of the granulated material the viscosity of the post-consumer resin is increased by means of a reactive additive (RA) and a physical blowing agent is introduced to the mixture, wherein
   (A) the reactive additive is a concentrate comprising
      (i) an ethylene-acrylate copolymer,
      (ii) a high-temperature thermoplastic resin which is selected from a group consisting of a high-temperature thermoplastic resin having 1) a melting point not lower than 200°C for crystalline or 2) a glass transition temperature not lower than 140°C for amorphous polymers, and
      (iii) a multifunctional compound selected from of one or more chain-extending/ branching ingredients having either a melting point or a reaction temperature higher than 140°C, wherein
      the multifunctional compound is selected from a group consisting of tetracarboxylic dianhydride, polyepoxides, oxazolines, oxazines, acyllactams and antioxidant containing sterically hindered phenolic end groups or mixtures thereof;
   (B) the physical blowing agent is either a hydrocarbon, fluorocarbon, argon, nitrogen, CO₂, or a mixture thereof; and
   (C) the term "carefully cleaned" means a cleaning from dust and moisture.
5. The process according to item 4, wherein nucleating agents and fillers are added.
6. An article comprising the foam according to anyone of items 1 to 3.
7. The use of the article according to item 6 for thermal and/or acoustic insulation.
8. The use of the article according to item 6 for kitting and construction purposes such as core foams for highly loaded, high durable products, e.g. windmill blades, or building elements such as panels or tiles, for e.g. wall, roof, ceiling, floor or profiles, e.g. for studs, windows.

During the subsequent foam extrusion chain extending additives need to be added to raise the intrinsic viscosity to a level above 1.2 ml/g. Further additives, e.g. nucleating agents, fillers, flame retardants etc. can be added to adjust the properties of the foam.

This invention focused on foaming a resin or a blend of resins, where most of the polymer consisted of post consumer material, such as washed PET bottle flakes. Different types of post consumer sources were evaluated and used in different levels. During this work a reactive additive (RA) that increases the viscosity by chain extension and side chain branching during extrusion (described as chain extending concentrate in European patent application 09 006 678.8) has been used. The reactive additive comprises an ethylene-acrylate copolymer, a high-temperature thermoplastic resin as defined in the appended claims and a multifunctional compound as defined in the appended claims. The ethylene-acrylate copolymer is selected from ethylene butyl acrylate (EBA), ethylene ethyl acrylate (EEA) and ethylene methyl acrylate (EMA) copolymer. The multifunctional compound is selected from one or more of chain-extending/branching ingredients having a melting point higher than 140°C, e.g. tetracarboxylic dianhydride, polyepoxides, oxazolines, oxazines, acyllactams and antioxidant containing sterically hindered phenolic end groups. The high-temperature thermoplastic is selected from one of thermoplastic resins or mixtures thereof having a melting point not lower than 200°C for crystalline polymers or a glass transition temperature not lower than 140°C for amorphous polymers. In addition, the high-temperature thermoplastics need to be completely molten up to 300°C.

In all below trials, a modified twin-screw extruder from Berstorff was used. The extruder was equipped with special screws made for PET foaming, having compressive ratio larger than 2.0, and L/D larger than 28. Furthermore reversed elements need to be used in order to prevent gas escape backwards from injection area. In addition, the feeding pipe used in dosing station was equipped with vibrating device where the vibration frequency could be controlled. This enabled consistent feeding of amorphous post-consumer polyester bottle flakes, and prevented bridging of the material.

Physical blowing agent was injected after the melting zone under high pressure, and consequently the melt was mixed by means of screw elements and static mixer. The level of blowing agent was adjusted to achieve the target density. The mixture of blowing agent and polymer was cooled during extrusion close to crystallization point and sufficient pressure was maintained by controlling the viscosity of the resin and the temperature of the mixture.

The reactive additive (RA) was used in different levels to adjust the viscosity and pressure to a sufficient level (typically min. 60 bars measured in the extruder head). As the mixture exited the extruder, the rapid pressure drop caused rapid foaming of the polymer, whereby the cell size was controlled by level of special nucleating agent: Nucleating agent could be an inorganic material, in this case a talc containing masterbatch, organic material or gaseous material. Furthermore a flame retardant additive, such as phosphate, halogen, borate, melamine or similar containing component may be used for applications where fire retardancy is required. The foam was then cooled down and later analyzed in the laboratory. All raw materials were dried to contain moisture below 100 ppm prior to feeding into the extruder.

In this invention post consumer flakes that have significantly lower starting IV, i.e. higher than 0.6 ml/g, preferably higher than 0.65 ml/g, have been used, where by means of reactive foam extrusion the IV of the polymer is increased in a single step to a satisfactory level while at the same time a physical blowing agent is introduced to the mixture. As the mixture exits the extruder, the IV has reached level superior to 1.2 ml/g, and consequently by sudden pressure drop the physical blowing agent rapidly expands and foaming takes place.

### Comparative example 1:

Commercially available PET resin from Sabic (BC-112) was fed into the extruder with throughput of 400 kg/hr together with the previously mentioned reactive additive (RA) and a nucleating agent (NA). Physical blowing agent was adjusted to a level that would result in final product having density of 100 kg/m³. At an RA level of 3.4 wt% and NA level of 2.5 wt% very nice foam with homogeneous cell structure and uniform rectangular shape was obtained. The virgin PET resin was characterized of having an average MFR of 38.3 g/10min at 260°C using 2.16 kg weight (die with L = 8mm and D = 2.095mm).

### Comparative example 2:

The comparative example 1 was repeated, but replacing BC-112 material with post consumer flakes from RE-PET. The polymer was fed into the extruder with throughput of 400 kg/hr together with the reactive additive (RA) and the nucleating agent (NA). Physical blowing agent was adjusted to a level that would result in final product having density of 100 kg/m³. The process was found very unstable, mostly due to dosing problems and huge variations in reactivity of the additive (RA was used in level of 6.5% and NA at level of 2.5%). Foam was obtained, but visually it did not look good, containing some collapsed areas, and in average larger cells than from example 1. Furthermore the shape was not rectangular, but collapsed from the middle. Additionally it was noticed that the extruder die was partially blocked after a short time due to impurities present in the post consumer flakes, which partially caused the uneven cellular structure.

### Comparative example 3:

Granulated post-consumer PET material from PTP (PET-M) was fed into the extruder with throughput of 400 kg/hr together with the reactive additive (RA) and the nucleating agent (NA). Physical blowing agent was adjusted to a level that would result in final product having density of 100 kg/m³. The RA level was kept the same as in comparative example 2 (6.5 wt%). Poor looking foam, with significant cell collapse and rough surface characteristic was obtained and pressures were low in the extruder.

### Comparative example 4:

Comparative example 3 was repeated but with RA level of 8.0 wt%. The pressure in the extruder remained low and only an unsatisfactory foam quality was obtained (slightly improved from example 3).

### Reference example 1:

The recipe from comparative Example 3 was used, but 15 wt% of PET-M was replaced by virgin resin BC-112. Immediately the viscosity increased to sufficient level and good looking foam with uniform cell structure and rectangular shape was obtained by using RA at the level of 6.5 wt%. The process was found quite stable.

### Reference example 2:

Post consumer flakes from RE-PET were compounded and filtered at an external compounding company as received using a twin-screw extruder at 300rpm. The granulated material had an average MFR of 261 g/10min at 260°C using 2.16 kg weight.

### Reference example 3:

Post consumer flakes from RE-PET were compounded and filtered at an external compounding company using a twin-screw extruder which was equipped with vacuum port and screw speed was set at 150 rpm. Also the material was pre-cleaned from dust and moisture prior to compounding. The granulated material had an average MFR of 33.3 g/10min at 260°C using 2.16 kg weight.

### Reference example 4:

Post consumer flakes from RE-PET were compounded and filtered at an external compounding company using a twin-screw extruder with vacuum port and a screw speed of 150 rpm (as in reference example 3). In addition a relatively low level of reactive additive (RA=1.5 wt%) was compounded with the flakes. The granulated material had an average MFR of 14.3 g/10min at 260°C using 2.16 kg weight.

### Reference example 5:

The granulated raw material according to reference example 2 was fed into the extruder with throughput of 400 kg/hr together with the reactive additive (RA) and the nucleating agent (NA). Physical blowing agent was adjusted to a level that would result in final product having density of 100 kg/m³. RA was adjusted to level of 8.0 wt%, the NA at level of 2.5 wt% and the process was found unstable with high pressure variations and poor looking foam was obtained. The foam was characterized having larger than usual average cell size and a rough surface, which can be linked to pre-foaming of the material.

### Innovative example 6:

The granulated raw material according to reference example 3 was fed into the extruder with throughput of 400 kg/hr together with the reactive additive (RA) and the nucleating agent (NA). Physical blowing agent was adjusted to a level that would result in final product having density of 100 kg/m³. RA was adjusted to level of 6.5 wt%, the NA at level of 2.5 wt% and very nice looking foam was obtained, characterized by uniform cell structure and an almost rectangular shape. The process was found quite stable under these conditions, with some variations in pressure.

### Innovative example 7:

The granulated raw material according to reference example 4 was fed into the extruder with throughput of 400 kg/hr together with RA and the nucleating agent (NA). Physical blowing agent was adjusted to a level that would result in final product having density of 100 kg/m³. At RA level of 5.5 wt% the extrusion process was found very stable and the foam looked identical to the foam obtained from Comparative example 1.

### Innovative example 8:

A foam according to Innovative example 7 was manufactured, where additionally two different flame retardants were mixed with the recipe, more specifically 5 wt% of Exolit 950 and 1 wt% of Mastertek 372815 were used. Furthermore the blowing agent was adjusted to a higher level so that a density of 70 kg/m³ (±5%) was achieved. The foam looked very good, having slightly larger cells than obtained in Innovative example 7, and the process was found stable. The foam was characterized of having B2 classification according to DIN 4102 and E-class according to ISO 11925.

## Claims

1. An expanded, cellular material comprising at least 50 wt% of post-consumer PET resin and less than 50 wt% of virgin PET resin obtainable by pre-cleaning the post-consumer PET resin from dust and moisture, compounding and filtering in an additional extrusion step and afterwards granulating, and whereby the intrinsic viscosity of the polymer(s) is upgraded during the subsequent foam extrusion process and increased by means of a reactive additive, a physical blowing agent is introduced to the mixture and the intrinsic viscosity of the extruder exiting foam is higher than 1.2 ml/g, preferably above 1.35 ml/g and the density is between 40 and 200 kg/m³, preferably between 50 and 150 kg/m³, wherein
(A) the reactive additive is a concentrate comprising
(i) an ethylene-acrylate copolymer,
(ii) a high-temperature thermoplastic resin which is selected from a group consisting of a high-temperature thermoplastic resin having 1) a melting point not lower than 200°C for crystalline or 2) a glass transition temperature not lower than 140°C for amorphous polymers, and
(iii) a multifunctional compound selected from of one or more chain-extending/ branching ingredients having either a melting point or a reaction temperature higher than 140°C, wherein
the multifunctional compound is selected from a group consisting of tetracarboxylic dianhydride, polyepoxides, oxazolines, oxazines, acyllactams and antioxidant containing sterically hindered phenolic end groups or mixtures thereof; and
(B) the physical blowing agent is either a hydrocarbon, fluorocarbon, argon, nitrogen, CO₂, or a mixture thereof.

2. The expanded, cellular material according to claim 1 which further comprises a flame retardant or a mixture of flame retardants to improve the fire properties.

3. The expanded, cellular material according to any of the preceding claims which further comprises nucleating agents and fillers.

4. A process for producing an expanded, cellular material according to anyone of claims 1 to 3, comprising at least 50 wt% of post-consumer PET resin and less than 50 wt% of virgin PET resin, wherein the post-consumer PET resin is carefully cleaned from dust and moisture, compounded and filtered in an extruder and afterwards granulated, and wherein during the subsequent foam extrusion of the granulated material the viscosity of the post-consumer resin is increased by means of a reactive additive and a physical blowing agent is introduced to the mixture, wherein
(A) the reactive additive is a concentrate comprising
(i) an ethylene-acrylate copolymer,
(ii) a high-temperature thermoplastic resin which is selected from a group consisting of a high-temperature thermoplastic resin having 1) a melting point not lower than 200°C for crystalline or 2) a glass transition temperature not lower than 140°C for amorphous polymers, and
(iii) a multifunctional compound selected from of one or more chain-extending/ branching ingredients having either a melting point or a reaction temperature higher than 140°C, wherein
the multifunctional compound is selected from a group consisting of tetracarboxylic dianhydride, polyepoxides, oxazolines, oxazines, acyllactams and antioxidant containing sterically hindered phenolic end groups or mixtures thereof;
(B) the physical blowing agent is either a hydrocarbon, fluorocarbon, argon, nitrogen, CO₂, or a mixture thereof; and
(C) the term "carefully cleaned" means a cleaning from dust and moisture.

5. The process according to claim 4, wherein nucleating agents and fillers are added.

6. An article comprising the foam according to anyone of claims 1 to 3.

7. The use of the article according to claim 6 for thermal and/or acoustic insulation.

8. The use of the article according to claim 6 for kitting and construction purposes such as core foams for highly loaded, high durable products, e.g. windmill blades, or building elements such as panels or tiles, for e.g. wall, roof, ceiling, floor or profiles, e.g. for studs, windows.

## Patentansprüche

1. Geschäumtes, zelliges Material, umfassend wenigstens 50 Gew.-% recyceltes PET-Harz und weniger als 50 Gew.-% frisch hergestelltes PET-Harz, erhältlich durch Vorreinigen des recycelten PET-Harzes von Staub und Feuchtigkeit, Compoundieren und Filtrieren in einem zusätzlichen Extrusionsschritt und nachfolgendes Granulieren, und wobei die innere Viskosität des (der) Polymers (Polymere) während des nachfolgenden Schaumextrusionsverfahrens verbessert und durch ein reaktives Additiv erhöht wird, dem Gemisch ein physikalisches Blähmittel zugesetzt wird, und die innere Viskosität des aus dem Extruder austretenden Schaums über 1,2 ml/g, vorzugsweise über 1,35 ml/g liegt und die Dichte zwischen 40 und 200 kg/m³, vorzugsweise zwischen 50 und 150 kg/m³ beträgt, wobei
(A) das reaktive Additiv ein Konzentrat ist, umfassend
(i) ein Ethylen-Acrylat-Copolymer,
(ii) ein hochtemperaturbeständiges thermoplastisches Harz, welches ausgewählt ist aus einer Gruppe bestehend aus einem hochtemperaturbeständigen thermoplastischen Harz mit 1) einem Schmelzpunkt von nicht niedriger als 200°C für kristalline oder 2) einer Glasübergangstemperatur von nicht weniger als 140°C für amorphe Polymere und
(iii) eine multifunktionale Verbindung ausgewählt aus einem oder mehreren kettenverlängernden/verzweigenden Bestandteilen mit entweder einem Schmelzpunkt oder einer Reaktionstemperatur von höher als 140°C, wobei
die multifunktionale Verbindung ausgewählt ist aus einer Gruppe bestehend aus Tetracarbonsäuredianhydrid, Polyepoxiden, Oxazolinen, Oxazinen, Acyllactamen und Antioxidans enthaltend sterisch gehinderte phenolische Endgruppen oder Gemischen davon; und
(B) das physikalische Blähmittel entweder ein Kohlenwasserstoff, Fluorkohlenstoff, Argon, Stickstoff, CO₂ oder ein Gemisch davon ist.

2. Das geschäumte, zellige Material nach Anspruch 1, das außerdem noch zur Verbesserung des Brandverhaltens ein Flammschutzmittel oder ein Flammschutzmittelgemisch umfasst.

3. Das geschäumte, zellige Material nach einem der vorhergehenden Ansprüche, das außerdem noch Nukleierungsmittel und Füller umfasst.

4. Verfahren zur Herstellung eines geschäumten, zelligen Materials nach einem der Ansprüche 1 bis 3, umfassend wenigstens 50 Gew.-% recyceltes PET-Harz und weniger als 50 Gew.-% frisch hergestelltes PET-Harz, wobei das recycelte PET-Harz sorgfältig von Staub und Feuchtigkeit gereinigt, compoundiert und in einem Extruder filtriert und danach granuliert wird, und wobei während der nachfolgenden Schaumextrusion des granulierten Materials die Viskosität des recycelten Harzes durch ein reaktives Additiv erhöht wird und dem Gemisch ein physikalisches Blähmittel zugesetzt wird, wobei
(A) das reaktive Additiv ein Konzentrat ist, umfassend
(i) ein Ethylen-Acrylat-Copolymer,
(ii) ein hochtemperaturbeständiges thermoplastisches Harz, welches ausgewählt ist aus einer Gruppe bestehend aus einem hochtemperaturbeständigen thermoplastischen Harz mit 1) einem Schmelzpunkt von nicht niedriger als 200°C für kristalline oder 2) einer Glasübergangstemperatur von nicht weniger als 140°C für amorphe Polymere und
(iii) eine multifunktionale Verbindung ausgewählt aus einem oder mehreren kettenverlängernden/verzweigenden Bestandteilen mit entweder einem Schmelzpunkt oder einer Reaktionstemperatur von höher als 140°C, wobei
die multifunktionale Verbindung ausgewählt ist aus einer Gruppe bestehend aus Tetracarbonsäuredianhydrid, Polyepoxiden, Oxazolinen, Oxazinen, Acyllactamen und Antioxidans enthaltend sterisch gehinderte phenolische Endgruppen oder Gemischen davon;
(B) das physikalische Blähmittel entweder ein Kohlenwasserstoff, Fluorkohlenstoff, Argon, Stickstoff, CO₂ oder ein Gemisch davon ist; und
(C) der Begriff "sorgfältig gereinigt" ein Reinigen von Staub und Feuchtigkeit bedeutet.

5. Verfahren nach Anspruch 4, wobei Nukleierungsmittel und Füller zugesetzt werden.

6. Erzeugnis, umfassend den Schaumstoff nach einem der Ansprüche 1 bis 3.

7. Verwendung eines Erzeugnisses nach Anspruch 6 für die Wärme- und/oder Schallisolierung.

8. Verwendung eines Erzeugnisses nach Anspruch 6 für Ausrüstungs- und Bauzwecke wie für Kernschäume für hochbelastete, hohe Dauerhaftigkeit aufweisende Erzeugnisse, wie z.B. Windmühlenflügel oder Bauelemente, wie Platten oder Fliesen, wie z.B. für Wände, Dächer, Zimmerdecken, Böden oder Profile sowie z.B. für Abstützungen, Fenster.

## Revendications

1. Matériau cellulaire expansé comprenant au moins 50 % en poids de résine de PET de post-consommation et moins de 50 % en poids de résine de PET vierge pouvant être obtenu par pré-nettoyage de la résine de PET de post-consommation pour éliminer la poussière et de l'humidité, mélange et filtration dans une étape d'extrusion supplémentaire et ensuite granulation, et où la viscosité intrinsèque du ou des polymères est améliorée pendant le procédé d'extrusion de mousse subséquent et augmentée au moyen d'un additif réactif, un agent gonflant physique est introduit dans le mélange et la viscosité intrinsèque de la mousse quittant l'extrudeuse est supérieure à 1,2 ml/g, de préférence supérieure à 1,35 ml/g et la masse volumique est entre 40 et 200 kg/m³, de préférence entre 50 et 150 kg/m³, où
(A) l'additif réactif est un concentré comprenant
(i) un copolymère éthylène-acrylate,
(ii) une résine thermoplastique haute température qui est choisie dans un groupe consistant en une résine thermoplastique haute température ayant 1) un point de fusion non inférieur à 200°C pour les polymères cristallins ou 2) une température de transition vitreuse non inférieure à 140°C pour les polymères amorphes, et
(iii) un composé multifonctionnel choisi parmi un ou plusieurs ingrédients d'allongement de chaîne/ramification ayant un point de fusion ou une température de réaction de plus de 140°C, où
le composé multifonctionnel est choisi dans un groupe consistant en un dianhydride tétracarboxylique, les polyépoxydes, les oxazolines, les oxazines, les acyllactames et un antioxydant contenant des groupes terminaux phénoliques subissant un empêchement stérique ou les mélanges de ceux-ci ; et
(B) l'agent gonflant physique est un hydrocarbure, un fluorocarbure, l'argon, l'azote, le CO₂, ou un mélange de ceux-ci.

2. Matériau cellulaire expansé selon la revendication 1 qui comprend en outre un ignifugeant ou un mélange d'ignifugeants pour améliorer les propriétés d'incendie.

3. Matériau cellulaire expansé selon l'une quelconque des revendications précédentes qui comprend en outre des agents de nucléation et des charges.

4. Procédé pour produire un matériau cellulaire expansé selon l'une quelconque des revendications 1 à 3, comprenant au moins 50 % en poids de résine de PET de post-consommation et moins de 50 % en poids de résine de PET vierge, où la résine de PET de post-consommation est soigneusement nettoyée pour éliminer la poussière et l'humidité, mélangée et filtrée dans une extrudeuse et ensuite granulée, et où pendant l'extrusion de mousse subséquente du matériau granulé la viscosité de la résine de post-consommation est augmentée au moyen d'un additif réactif et un agent gonflant physique est introduit dans le mélange, où
(A) l'additif réactif est un concentré comprenant
(i) un copolymère éthylène-acrylate,
(ii) une résine thermoplastique haute température qui est choisie dans un groupe consistant en une résine thermoplastique haute température ayant 1) un point de fusion non inférieur à 200°C pour les polymères cristallins ou 2) une température de transition vitreuse non inférieure à 140°C pour les polymères amorphes, et
(iii) un composé multifonctionnel choisi parmi un ou plusieurs ingrédients d'allongement de chaîne/ramification ayant un point de fusion ou une température de réaction de plus de 140°C, où
le composé multifonctionnel est choisi dans un groupe consistant en un dianhydride tétracarboxylique, les polyépoxydes, les oxazolines, les oxazines, les acyllactames et un antioxydant contenant des groupes terminaux phénoliques subissant un empêchement stérique ou les mélanges de ceux-ci ; et
(B) l'agent gonflant physique est un hydrocarbure, un fluorocarbure, l'argon, l'azote, le CO₂, ou un mélange de ceux-ci ; et
(C) le terme « soigneusement nettoyée » signifie un nettoyage pour éliminer la poussière et l'humidité.

5. Procédé selon la revendication 4, où des agents de nucléation et des charges sont ajoutés.

6. Article comprenant la mousse selon l'une quelconque des revendications 1 à 3.

7. Utilisation de l'article selon la revendication 6 pour l'isolation thermique et/ou acoustique.

8. Utilisation de l'article selon la revendication 6 à des fins d'équipement et de construction comme les mousses d'âme pour produits hautement durables hautement chargés, par exemple les pales d'éoliennes, ou les éléments de construction comme les panneaux ou les tuiles, par exemple pour parois, toits, plafonds, planchers ou les profilés, par exemple pour montants, fenêtres.
